# EUROPÄISCHE PATENTANMELDUNG

(11) **EP 2 272 883 A1**
(43) Veröffentlichungstag der Anmeldung: **12.01.2011**
(21) Anmeldenummer: 10168748.1
(22) Anmeldetag: 07.07.2010
(51) Int. Cl.: C08G 18/10, C08G 18/30, C08G 18/78

(54) **Monomerarmes Polyisocyanatprepolymer und monomerarmer Dosenschaum**

(30) Priorität: 08.07.2009 EP 09164929
(71) Anmelder: BASF SE, 67056 Ludwigshafen (DE)
(72) Erfinder: Reese, Hans-Jürgen, 49401, Damme (DE); Zöllinger, Michael, 73054, Eislingen (DE); Drogla, Verena, 49448, Lemförde (DE); Schmidt, Hans-Ulrich, 49090, Osnabrück (DE); Ullmann, Stefan, 87656, Germaringen (DE)

(57) **Zusammenfassung**

Die vorliegende Erfindung betrifft ein Verfahren zur Herstellung eines monomerarmen Polyisocyanatprepolymers bei dem man a) Polyisocyanat mit b) Wasser in Gegenwart von c) Lösungsmittel und d) gegebenenfalls Biuretisierungskatalysator zu biuretverknüpftem Polyisocyanat umsetzt, nicht umgesetztes monomeres Polyisocyanat abtrennt und die so erhaltene biuretverknüpfte Polyisocyanatkomponente im Überschuss mit Verbindungen mit mindestens zwei gegenüber Isocyanaten reaktive Gruppen in Gegenwart von Katalysatoren zum Polyisocyanatprepolymer umsetzt. Weiter betrifft die vorliegende Erfindung ein solches monomerarmes Polyisocyanatprepolymer und deren Verwendung als Einkomponenten-Dosenschaum aus Aerosolbehältern.

## Beschreibung

Die vorliegende Erfindung betrifft ein Verfahren zur Herstellung eines monomerarmen Polyisocyanatprepolymers bei dem man
a) Polyisocyanat mit
b) Wasser in Gegenwart von
c) Lösungsmittel und
d) gegebenenfalls Biuretisierungskatalysator
zu biuretverknüpftem Polyisocyanat umsetzt, nicht umgesetztes monomeres Polyisocyanat abtrennt und die so erhaltene biuretverknüpfte Polyisocyanatkomponente im Überschuss mit Verbindungen mit mindestens zwei gegenüber Isocyanaten reaktive Gruppen in Gegenwart von Katalysatoren zum Polyisocyanatprepolymer umsetzt. Weiter betrifft die vorliegende Erfindung ein solches monomerarmes Polyisocyanatprepolymer und deren Verwendung als Einkomponenten-Dosenschaum aus Aerosolbehältern.

Einkomponenten-Polyurethanschäume aus Aerosolbehältern sind im Bereich des Bauwesens häufig angewandte Montagemittel zum Einbau von Fenstern und Türen in Bauwerken sowie als Füllmaterial für bautechnisch bedingte Hohlräume oder Mauerdurchbrüche für Rohrinstallationen. Ein solcher Aerosolbehälter beinhaltet ein NCOterminiertes Polyurethanprepolymer sowie Treibmittel und Zusätze. Durch Austragen des Inhaltes mittels Treibmittel und dem anschließenden Aufschäumen und Aushärten mit Luftfeuchtigkeit entsteht der gewünschte Schaum. Je nach Zusammensetzung des Prepolymers sowie dem Vorhandensein bestimmter Zusätze ergeben sich harte bis weichelastische Schaumstoffe. Werden bestimmte schaumregulierende Zusatzstoffe mit in die Aerosoldose gegeben, kollabiert der ausgetragene Schaum und kann als Klebstoff eingesetzt werden. Hauptsächlich werden diese Schäume als Montageschaum eingesetzt. Ein großer Vorteil solcher Montageschäume ist deren einfache Handhabbarkeit. Die Herstellung der Einkomponenten-Dosenschäume erfolgt dabei durch Zugabe einer Isocyanatkomponente und eine Polyolkomponente in die Aerosoldose verbunden mit der Dosierung von Flüssiggasen als Löse- und Treibmittel, wobei sich meist innerhalb von wenigen Tagen das verwendbare Isocyanatprepolymer in der Aerosoldose bildet.

Ein Nachteil bekannter Einkomponenten-Dosenschäume oder entsprechender Klebstoffe auf Polyurethanbasis ist der häufig hohe Gehalt an leicht flüchtigen, gesundheitsschädlichen monomeren Isocyanaten. Es existieren daher Bestrebungen, den Anteil an flüchtigen Isocyanaten von Einkomponenten-Dosenschaumstoffen zu reduzieren. Eine Abtrennung von monomeren Isocyanat aus dem Prepolymeren ist aufgrund des besonderen Herstellungsverfahrens der Prepolymere bereits in der Aerosoldose nicht möglich. Es ist daher erforderlich, ein geringflüchtiges Isocyanat zur Herstellung der Einkomponenten-Dosenschäume einzusetzen.

Dabei werden zur Herstellung von Polyurethanen aus Reaktivitäts- und Verfügbarkeitsgesichtspunkten als Isocyanate meist Isocyanate auf Basis von Methylphenyldiisocyanat (MDI) und Toluylendiisocyanat (TDI) eingesetzt. Da der Dampfdruck von monomerem MDI geringer ist als der von monomerem TDI und damit der tolerable Restmonomergehalt bei MDI- basierten Einkomponenten-Dosenschäumen höher ist als bei solchen auf Basis von TDI, existieren technische Verfahren zur Entmonomerisierung hauptsächlich auf der Basis von MDI als Isocyanat. Weiter kommt hinzu, dass bei der Herstellung von MDI neben monomerem MDI auch eine Reihe höherkerniger Homologer des MDI anfallen, die von sich aus bereits einen sehr geringen Dampfdruck aufweisen und sich daher nach Abtrennung von monomerem MDI zur Herstellung von monomerarmen Prepolymeren anbieten. So offenbart EP 1518874 ein monomerarmes Isocyanat zur Fertigung von Einkomponenten-Dosenschäumen, welche aus einem definierten Polyphenylen-polymethylen-polyisocyanat (PMDI) als Isocyanatkomponente durch destillative Entfernung des monomeren Isocyanats gewonnen wird. Durch Einsatz dieses Produktes, gegebenenfalls im Gemisch mit Verdünnungsmitteln und weiteren isocyanatgruppenhaltigen Verbindungen, werden so monomerarme Einkomponentenschäume erhalten. Nachteilig hierbei ist, dass so gefertigte Einkomponenten-Dosenschäume wenig lagerstabil sind, wodurch der Inhalt der Aerosoldruckbehälter innerhalb weniger Wochen fest und damit unbrauchbar wird. Dies kann durch die Bildung von Uretoniminen aus den höherkernigen Bausteinen des MDI erklärt werden.

Auch WO 2005/007721 A1 beschreibt den Einsatz von Gemischen aus monomerarmen Polyisocyanatprepolymeren auf Basis von entmonomerisiertem Polyphenylen-polymethylen-polyisocyanat (PMDI) in Mischung mit trimerisiertem Hexamethylendiisocyanat und Verdünnungsmitteln. Nachteilig sind hier die sich zur Realisierung des geforderten verminderten Monomergehaltes an Isocyanat ergebenden extrem hohen Viskositäten der Isocyanate. Daraus resultieren Probleme bei der praktischen Anwendung der Prepolymere. Weiter ist auch bei den aus WO 2005/007721 bekannten Polyisocyanatprepolymeren die Lagerstabilität nur gering.

Aus WO 2006/063750 ist ein Verfahren zur Herstellung von lagerstabilen, monomerarmen Isocyanaten, insbesondere aliphatischen Isocyanaten, für die Herstellung von Lackgrundstoffen bekannt. Dabei werden Isocyanate mit Wasser zu Biuret-Verbindungen umgesetzt. Verbleibendes monomeres Isocyanat wird beispielsweise destillativ abgetrennt. Polyisocyanatprepolymere sind aus WO 2006/063750 nicht bekannt.

Aufgabe der vorliegenden Erfindung war es, monomerarmes Polyisocyanatprepolymeres zu liefern, das lagerstabil ist und einen sehr geringen Anteil an monomeren Isocyanaten bei kleinem Gesamt-Dampfdruck aufweist. Weiter war es Aufgabe der vorliegenden Erfindung einen Einkomponenten-Dosenschaum zu liefern, von dem eine möglichst geringe gesundheitliche Gefährdung für den Anwender ausgeht.

Diese Aufgabe wird gelöst durch ein Verfahren zur Herstellung eines monomerarmen Polyisocyanatprepolymers auf Basis von Polyisocyanat bei dem man
a) Polyisocyanat mit
b) Wasser in Gegenwart von
c) Lösungsmittel und
d) gegebenenfalls Biuretisierungskatalysator
zu biuretverknüpftem Polyisocyanat umsetzt, nicht umgesetztes monomeres Polyisocyanat abtrennt und die so erhaltene biuretverknüpfte Polyisocyanatkomponente im Überschuss mit Verbindungen mit mindestens zwei gegenüber Isocyanaten reaktive Gruppen in Gegenwart von Katalysatoren und zum Polyisocyanatprepolymer umsetzt.

Als Polyisocyanate kommen beispielsweise aliphatische, cycloaliphatische und bevorzugt aromatische Polyisocyanate, insbesondere Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten C6-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate, wie 1 ,5-Naphtylen-diisocyanat (1,5-NDI), 2,4- und 2,6-Toluylendiisocyanat (TDI) sowie deren Gemische, 2,4'-, 2,2'-, und vorzugsweise 4,4'-Diphenylmethandiisocyanat (MDI) sowie Mischungen aus mindestens zwei dieser Isomere, Polyphenyl-polymethylen-polyisocyanate (Polymer-MDI, PMDI) mit zwei oder mehr aromatischen Systemen, Mischungen aus PMDI und Toluylen-Diisocyanaten, Polyphenyl-Polyisocyanate, urethanmodifizierte flüssige 4,4'- und/oder 2,4-Diphenylmethandiisocyanate und 4,4'-Diisocyanato-diphenylethan-(1,2). Vorzugsweise werden aromatische Diisocyanate, insbesondere Toluylendiisocyanate als Polyisocyanat a) eingesetzt.

Zur Herstellung der biuretverknüpften Polyisocyanats kann die Reaktion mit Wasser nach einem bekannten Verfahren durchgeführt werden. Ein solches Verfahren und dessen bevorzugte Durchführung ist beispielsweise in WO 2006/036750 beschrieben. Vorzugsweise wird Wasser b) in einer Menge von 5 bis 20 mol-%, besonders bevorzugt von 8 bis 15 mol-%, bezogen auf die Isocyanatgruppen, eingesetzt.

Die Vermischung des Polyisocyanats mit Wasser findet in der Regel bei Temperaturen von mindestens 30 °C, bevorzugt von mindestens 50 °C, besonders bevorzugt von mindestens 80 °C und ganz besonders bevorzugt von mindestens 100 °C statt.

Vorzugsweise wird die Biuretverknüpfung des Polyisocyanats in Gegenwart eines Biuretisierungskatalysators d) durchgeführt. Dabei können übliche Katalysatoren zur Biuretverknüpfung eingesetzt werden. Diese umfassen beispielsweise OH-acide Verbindungen, wie aus DE-A1 44 43 885 bekannt.

Als OH-acide Verbindungen kommen für das erfindungsgemäße Verfahren insbesondere Protonensäuren in Betracht. Bevorzugt können eingesetzt werden und haben sich besonders bewährt: Phosphorsäuren und/oder deren Mono- und/oder Dialkylester oder -arylester und/oder Hydrogensulfate. Verwendung finden vorzugsweise Mono- und/oder Dialkylester und/oder -arylester der Phosphorsäure, deren aliphatische, verzweigt aliphatische, araliphatische oder aromatische Reste 1 bis 30, vorzugsweise 4 bis 20, Kohlenstoffatome aufweisen. Bevorzugt kommen Di-(2-ethylhexyl)phosphat, Di-iso-propylphosphat, Di-(n-butyl)phosphat und/oder Di-hexadecylphosphat zur Anwendung.

Als Biuretisierungskatalysator können ferner beispielsweise starke anorganische Lewis- oder Brønstedt-Säuren, wie beispielsweise Bortrifluorid, Aluminiumtrichlorid, Schwefelsäure, Phosphorige Säure, Salzsäure und/oder Salze aus stickstoffhaltigen Basen und anorganischen und/oder organischen Säuren, wie sie beschrieben sind in DE-A-19 31 055, Seite 3, letzter Absatz bis Seite 6, erster ganzer Absatz, was hiermit durch Referenznahme Gegenstand der vorliegenden Offenbarung sei, eingesetzt werden.

Weiter können als Biuretisierungskatalysatoren auch Trialkylester und/oder Arylester von Phosphorsäure eingesetzt werden. Insbesondere wird als Biuretisierungskatalysator Diethylhexylphosphat eingesetzt.

Der Katalysator wird vorzugsweise in einer Menge von 0,01 bis 0,5 Gew.-%, besonders bevorzugt von 0,05 bis 0,3 Gew.-%, bezogen auf das Gesamtgewicht des eingesetzten Polyisocyanats, verwendet.

Falls gewünscht, kann zusätzlich noch eine kleine Menge eines Stabilisators zugesetzt werden ausgewählt aus der Gruppe Harnstoff, Ammoniak, Biuret, Harnstoffderivaten oder Carbonsäureamiden, wie sie beschrieben sind in WO 96/25444, bevorzugt Harnstoff, N-Methylharnstoff, N-Ethylharnstoff, N,N-Dimethylharnstoff, N,N'-Dimethylharnstoff, N,N-Diethylharnstoff, N,N'-Diethylharnstoff, Ethylenharnstoff oder Phenylharnstoff, besonders bevorzugt ist Harnstoff.

Derartige Stabilisatoren werden in Mengen von 0,01 - 2,0, bevorzugt 0,05 - 1 mol%, bezogen auf die Isocyanatgruppen in den Polyisocyanaten a) eingesetzt, vorzugsweise in einem Lösungsmittel, besonders bevorzugt in Wasser.

Die Durchführung der Biuretverknüpfung erfolgt in einem Lösungsmittel. Dabei muss das Lösungsmittel hochsiedend sein und darf das anschließenden Abtrennungsverfahren des monomeren Polyisocyanats, beispielsweise durch Destillation, nicht stören.

Beispiele für Kohlenwasserstoffe als Lösungsmittel sind aromatische und/oder (cyclo)aliphatische Kohlenwasserstoffe und deren Gemische, halogenierte Kohlenwasserstoffe, Ester und Ether.

Besonders bevorzugt sind ein- oder mehrfach alkylierte Benzole und Naphthaline sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich.

Erfindungsgemäß bevorzugt eingesetzt werden Methoxypropylacetat, Trimethylphosphat, Tri-n-butylphosphat und Triethylphosphat oder beliebige Mischungen dieser Verbindungen.

Als Lösungsmittel werden besonders bevorzugt solche eingesetzt, die neben einem guten Löseverhalten und einer ausgeprägten Verringerung der Viskosität der erhaltenen Biuretverknüpften Polyisocyanate einen zusätzlichen Effekt im Einkomponenten-Dosenschaum aufweist. So werden ganz besonders bevorzugt organische Phosphate, wie Tris(2-chlorisopropyl)phosphat oder Triethylphosphat und/oder halogenierte Kohlenwasserstoffe, insbesondere aliphatische halogenierte Kohlenwasserstoffe und noch bevorzugter chlorierte Paraffine als Lösungsmittel c) eingesetzt. Diese wirken im Einkomponenten-Dosenschaum als Flammschutzmittel. Als besonders bevorzugtes Lösungsmittel c) werden daher halogenierte aliphatische Kohlenwasserstoffe, insbesonders chlorierte Paraffine eingesetzt Dabei beträgt der Chlorierungsgrad vorzugsweise 30 bis 70 %.

Nach erfolgter Biuretverknüpfung wird das Reaktionsprodukt der Abtrennung von monomerem Polyisocyanat unterworfen. Dies erfolgt vorzugsweise mittels Destillation, besonders bevorzugt im Vakuum bei einem Druck von weniger als 100 hPa, ganz besonders bevorzugt weniger als 10 hPa und insbesondere weniger als 1 hPa. Dabei wird vorzugsweise bei geringen Temperaturen, beispielsweise kleiner 150 °C, insbesondere kleiner 100 °C gearbeitet. Als Destillationsapparaturen eignen sich beispielsweise Flash-, Fallfilm-, Dünnschicht- oder Kurzwegverdampfer, vorzugsweise werden Kurzwegverdampfer eingesetzt.

Nach erfolgter Abtrennung von monomerem Polyisocyanat kann ein weiteres Lösungsmittel zur Viskositätserniedrigung zugegeben werden. Auch hier können die unter c) genannten Lösungsmittel eingesetzt werden. Vorzugsweise werden organische Phosphate, wie Tris(2-chlorisopropyl)phosphat oder Triethylphosphat, eingesetzt.

Zur Herstellung der erfindungsgemäßen monomerarmen Polyisocyanatprepolymere wird die biutretverknüpfte Polyisocyanatkomponente mit Verbindungen mit mindestens zwei gegenüber Isocyanat reaktiven Gruppen, in Gegenwart von Katalysatoren umgesetzt. Vorzugsweise wird dazu das biuretverknüpfte Polyisocyanat, die Verbindung mit mindestens zwei gegenüber Isocyanat reaktiven Gruppen, Katalysator, Treibmittel und gegebenenfalls sonstige Hilfs- und Zusatzstoffe in einen Behälter gegeben, der Behälter verschlossen und die Einsatzstoffe homogenisiert. Dabei werden die biuretverknüpften Polyisocyanate in Bezug auf gegenüber Isocyanat reaktive Gruppen im Überschuss eingesetzt. Damit ist auch ein nach diesem Verfahren hergestelltes monomerarmes Polyisocyanatprepolymeres Gegenstand der Erfindung. Gegebenenfalls können zur Herstellung des erfindungsgemäßen Polyisocyanatprepolymers auch weitere, geringflüchtige Polyisocyanate eingesetzt werden. Solche nicht flüchtigen Polyisocyanate sind dem Fachmann bekannt und umfassen beispielsweise höherkernige Homologe des MDI. Besonders bevorzugt wird zur Herstellung des erfindungsgemäßen Polyisocyanatprepolymers ausschließlich biuretverknüpftes Polyisocyanat eingesetzt.

Das so erhaltene Polyisocyanatprepolymer weist einen geringen Gehalt an monomerem Polyisocyanat, das heißt flüchtigem Polyisocyanat, auf. Der Monomergehalt im Polyisocyanatprepolymer ist vorzugsweise kleiner 0,5 Gew.-%, besonders bevorzugt kleiner 0,25 Gew.-% und insbesondere kleiner 0,15 Gew.-%, jeweils bezogen auf das Gesamtgewicht des Polyisocyanatprepolymers. Werden keine weiteren, nicht flüchtigen Isocyanate eingesetzt weist das erfindungsgemäße Polyisocyanatprepolymer einen Gehalt an nicht biuretverknüpften Polyisocyanaten auf von vorzugsweise weniger als 0,5 Gew.-%, besonders bevorzugt weniger als 0,25 Gew.-% und insbesondere weniger als 0,15 Gew.-%, jeweils bezogen auf das Gesamtgewicht des Polyisocyanatprepolymers. Weiter ist das Polyisocyanatprepolymer lange lagerstabil.

Befindet sich das Polyisocyanatprepolymer zusammen mit Treibmittel in einem Druckbehälter wird von einem Einkomponenten-Dosenschaum gesprochen. Vorzugsweise wird der Einkomponenten-Dosenschaum erhalten indem man biuretverknüpfte Polyisocyanate, Verbindungen mit mindestens zwei gegenüber Isocyanat reaktiven Gruppen, Treibmittel, Katalysatoren und gegebenenfalls Hilfs- und Zusatzstoffe in den Druckbehälter gibt, anschließend den Druckbehälter verschließt und den Inhalt homogenisiert, beispielsweise durch schütteln. Alternativ wird ein erfindungsgemäßer Einkomponenten-Dosenschaum erhalten indem man die Umsetzung von biuretverknüpfte Polyisocyanate, Verbindungen mit mindestens zwei gegenüber Isocyanat reaktiven Gruppen und Katalysatoren zum Polyisocyanatprepolymer außerhalb des Druckbehälters durchführt. Das so erhaltene Umsetzungsprodukt wird dann zusammen mit Treibmitteln und gegebenenfalls sonstigen Hilfs- und Zusatzstoffen in den Druckbehälter gegeben. Damit ist ein weiterer Gegenstand der Erfindung ein Einkomponenten-Dosenschaum, endhaltend ein erfindungsgemäßes Polyisocyanatprepolymer.

Enthält der Einkomponenten-Dosenschaum des Weiteren noch schaumregulierende Zusatzstoffe, die zu einem Kollabieren des aufgetragenen Schaums führen, kann der Einkomponenten-Dosenschaum als Einkomponenten-Klebstoff eingesetzt werden.

Als Verbindungen mit mindestens zwei gegenüber Isocyanaten reaktiven Gruppen können übliche Verbindungen mit gegenüber Isocyanat reaktiven Gruppen eingesetzt werden. Vorzugsweise werden Polyetherole und/oder Polyesterole, insbesondere ausschließlich Polyetherole eingesetzt.

Erfindungsgemäße Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 4 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2, 3 und 4-wertige, bevorzugt 3-wertige Alkohole, wie Glycerin, Trimethylolpropan, Ethanolamin, Diethanolamin, Triethanolamin sowie andere dreiwertige Alkohole oder Amine mit drei aktiven Wasserstoffatomen in Betracht.

Die Polyetherpolyole, vorzugsweise Polyoxypropylen-polyoxyethylen-polyole, besitzen eine Funktionalität von 2 bis 4, vorzugsweise 2,5 bis 3,5 und besonders bevorzugt 2,6 bis 3,4 und zahlenmittlere Molekulargewichte von vorzugsweise 600 bis 8.000, besonders bevorzugt vorzugsweise von 1.000 bis 6.000 und insbesondere von 1000 bis 4000 g/mol.

Vorzugsweise wird als höhermolekulare Verbindungen mit mindestens zwei gegenüber Isocyanaten reaktiven Gruppen ein Gemisch aus einem trifunktionell gestartetem Polyetherol mit einem zahlenmittleren Molekulargewicht von 4000 ± 2000 g/mol (i), einem trifunktionell gestartetem Polyetherol mir einem Molekulargewicht von 1000 ± 200 g/mol (ii) und einem difunktionell gestartetem Polyetherol mit einem zahlenmittleren Molekulargewicht von 600 ± 100 g/mol (iii). Besonders bevorzugt wird als trifunktionell gestartetes Polyetherol (i) ein Glycerin gestartetes Polyetherol auf Basis von Propylenoxid und Ethylenoxid, als trifunktionell gestartetes Polyetherol (ii) ein Glycerin gestartetes Polyetherol auf Basis von Propylenoxid und Ethylenoxid und als difunktionell gestartetes Polyetherol (iii) ein Ethylenglycol gestartetes Polyetherol auf Basis von Ethylenoxid eingesetzt. Dabei beträgt das Gewichtsverhältnis von (i) : (ii): (iii) vorzugsweise 4 ± 1 : 8 ± 2 : 1 ± 0,5.

Weiter kann die Verbindungen mit mindestens zwei gegenüber Isocyanaten reaktiven Gruppen ein bromiertes Polyetherol mit einem Molekulargewicht von vorzugsweise 350 bis 1000, besonders bevorzugt 400 bis 600 g/mol und einer Funktionalität von vorzugsweise 2 bis 4 enthalten. Insbesondere wird als bromierte Polyetherpolyol ein difunktionell und/oder ein trifunktionell gestartetes Polyol auf Basis von Ephichlorhydrin eingesetzt, welches bromiert und enthydrochloriert wurde. Geeignete bromierte Polyetherole sind beispielsweise unter dem Handelsnamen IXOL® von der Firma Solvay erhältlich. Insbesondere können als bromierte Polyetherole IXOL^{®} M125 und IXOL® 251 eingesetzt werden.

Weiter kann die Verbindungen mit mindestens zwei gegenüber Isocyanaten reaktiven Gruppen neben den genannten Polyolen weitere übliche hydroxyfunktionellen Verbindungen, z. B. kurzkettige Diole, wie Ethylenglykol, Propylenglykol, Butandiol-1,4 als Kettenverlängerer, kurzkettige mindestens dreifunktionelle Alkohole wie Glyzerin oder Trimethylolpropan als Vernetzer und/oder Monoole als Molekulargewichtsregler enthalten. Vorzugsweise sind keine Kettenverlängerer, Vernetzer oder Molekulargewichtsregler enthalten.

Als Katalysatoren, welche insbesondere die Reaktion zwischen den NCO-Gruppen der Diisocyanate und den Hydroxylgruppen der Polyalkohole beschleunigen, können die nach dem Stand der Technik bekannten und üblichen stark basischen Amide wie beispielsweise 2,3-Dimethyl-3,4,5,6-tetrahydropyrimidin, Tris-(dialkylaminoalkyl)-s-hexahydrotriazine, wie z. B. Tris-(N,N-dimethylaminopropyl)-s-hexahydrotriazin und bevorzugt die üblichen tertiären Amine, wie z. B. Triethylamin, Tributylamin, Dimethylbenzylamin, N-Ethyl-, N-Methyl-, n-Cyclohexylmorpholin, Dimethylcyclohexylamin, Dimorpholinodiethylether, 2-(Dimethylaminoethoxy)-ethanol, 1,4-Diaza-bicyclo-(2,2,2)-octan, 1-Aza-bicyclo-(3,3,0)-octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol, Di-(4-N,N-dimethylaminocyclohexyl)-methan und ähnliche sowie organische Metallverbindungen wie Titansäureester, Eisenverbindungen wie z. B. Eisen-(III)-acetylacetonat, Zinnverbindungen, z. B. Zinn-(II)-Salze von organischen Carbonsäuren, beispielsweise Zinn-(II)-diacetat, das Zinn-(II)-Salz der 2-Ethylhexansäure (Zinn-(II)-octoat), Zinn-(II)-dilaurat oder die Dialkylzinn-(IV)- Salze von organischen Carbonsäuren, wie z. B. Dibutylzinn-(IV)- diacetat, Dibutylzinn-(IV)-dilaurat, Dibutylzinn-(IV)-maleat oder Dioktylzinn-(IV)-diacetat oder ähnliche sowie Dibutylzinn-(IV)- dimercaptid oder Gemische mit mindestens zwei der genannten Katalysatoren sowie synergistisch wirkende Kombinationen aus stark basischen Aminen und organischen Metallverbindungen eingesetzt werden. Besonders bevorzugt wird als Katalysator Dimorpholindietylether eingesetzt. Die Katalysatoren können in üblichen Mengen, beispielsweise 0,002 bis 5 Gew.-%, bezogen auf die Verbindungen mit mindestens zwei gegenüber Isocyanat reaktiven Gruppen eingesetzt werden.

Als Treibmittel können allgemein bekannte Treibmittel, wie z. B. Stoffe, die einen Siedepunkt unter Normaldruck im Bereich von -40 °C bis 120 °C besitzen, Gase und/oder flüssige Treibmittel eingesetzt werden, beispielsweise Kohlendioxid, Alkane und oder Cycloalkane wie beispielsweise Isobutan, Propan, n- oder iso- Butan, Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe, beispielsweise Dichlorfluormethan, Monofluortrichlormethan, Trifluortrichlorethan und/oder teilhalogenierte Kohlenwasserstoffe wie beispielsweise Trifluormethan, 1,1-Dichlor-1-fluorethan, Monochlortetrafluorethan, Monochlortrifluorethan, Monochlordifluorethan, Difluorethan, Dichlordifluorethan, Pentafluorethan, Tetrafluorethan, Dichlormonofluorethan oder Mischungen, die mindestens zwei der beispielhaft genannten Treibmittel enthalten.

Das Treibmittel wird üblicherweise in einer Menge von 0,5 bis 40 Gew.-%, bevorzugt 10 bis 32 Gew.-% bezogen auf das Gewicht der biutretverknüpften Polyisocyanatkomponente und den Verbindungen mit mindestens zwei gegenüber Isocyanaten reaktive Gruppen zugegeben.

Als Hilfs- und Zusatzstoffe können beispielsweise schaumregelnde Zusatzstoffe, Flammschutzmittel, Keimbildungsmittel, Oxidationsverzögerer, Farbstoffe und Pigmente, Inhibitoren, Stabilisatoren gegen Hydrolyse, Licht, Hitze oder Verfärbung, anorganische und/oder organische Füllstoffe, Verstärkungsmittel und/oder Weichmacher verwendet werden.

Nähere Angaben über die oben genannten Hilfsmittel- und Zusatzstoffe sind der Fachliteratur, beispielsweise der Monographie von J. H. Saunders und K. C. Frisch "High Polymers", Band XVI, Polyurethane, Teil 1 und 2, Verlag Interscience Publishers 1962 bzw. 1964, dem "Kunststoff-Handbuch", Band 7, Polyurethane, 3. Auflage, 1993, herausgegeben von G. Oertel, Carl-Hanser-Verlag, München oder der DE 29 01 774 zu entnehmen.

Soll der erfindungsgemäße Dosenschaum als Einkomponenten-Klebstoff eingesetzt werden, enthält die Aerosoldose des Weiteren schaumregulierende Zusatztzoffe. Vorzugsweise enthalten diese schaumregulierenden Zusatztzoffe Siliconöl. Dabei werden vorzugsweise Dimethylsiloxane mit einer Viskosität von 10 bis 1000 mPas eingesetzt. Neben Siliconöl kann der schaumregulierende Zusatzstoff weitere, übliche Schaumstabilisatoren und/oder Paraffinöl enthalten. Als Paraffinöl werden vorzugsweise gesättigte, aliphatische Kohlenwasserstoffe eingesetzt. Vorzugsweise sind die eingesetzten Paraffinöle bei 25 °C flüssig. Als Schaumstabilisatoren können beispielsweise Polyalkylenglykolpolysiloxan-Copolymere bevorzugt solche Produkte der Firma Goldschmidt unter der Handelsbezeichnung "Tegostab®" und besonders bevorzugt Tegostab® B2219 bzw. Tegostab® BF2270 eingesetzt werden.

Für den Einsatz als Einkomponenten-Klebstoff beträgt das Gewicht von Schaumstabilisator, Siliconöl und Paraffinöl besonders bevorzugt 150 ± 50 : 2 ± 1,2 : 2 ± 1,2. Dabei beträgt der Anteil der schaumregulierenden Zusatzstoffe d), bezogen auf das Gesamtgewicht der Komponenten a) bis f) vorzugsweise 0,5-5, besonders bevorzugt 1-3 Gew.-%. Dabei beträgt der Anteil an Siliconöl, bezogen auf das Gesamtgewicht der Komponenten a) bis f) vorzugsweise 0,02 bis 0,2 Gew.-%.

Der aus einem erfindungsgemäßen Dosenschaum hergestellte Polyurethanschaum oder Polyurethanklebstoff weist vorteilhafte mechanische Eigenschaften, wie eine hohe Elastizität und gleichzeitig eine hohe Zugfestigkeit auf. So ist beispielsweise im Vergleich zu bekannten Schaumstoffen auf Basis von MDI ist die Zugfestigkeit eines erfindungsgemäßen Schaums bei vergleichbarer Dehnung um das ca. 3- bis 7-Fache erhöht.

Im Folgenden soll die Erfindung anhand eines Beispiels näher erläutert werden.

### Beispiele

### Beispiel 1 - biurethaltige auf Toluylendiisocyanat basierende Zubereitungen

**Ausführungsbeispiel 1 - Ausführungsform 1 - Bezeichnung Biuret25**

| | | | |
|---|---|---|---|
| Rezeptur (Biuret 25): | Lupranat T 80 A | 5,74 Mol | 1,00 kg |
| | Wasser (destilliert) | 0,4833 Mol | 8,71 g |
| | Diethylhexylphosphat | 1000 ppm | 1,00 g |
| | Chlorparaffin (30 Gew.-% bezüglich Biuret) | | 102,80 g |

### Herstellung von Biuret 25:

In einen 2000 mL beheizbaren Rührreaktor mit Turbinenrührer und Stickstoffanschluss, sowie Abgasleitung und Rückflüsskühler werden 1,0 g (1000 ppm) Diethylphosphat in Stickstoff vorgelegt. Anschließend werden 1000 g (5,74 mol) Lupranat T 80 dosiert und unter leichtem Stickstoffstrom auf 65 °C temperiert. Danach wird Wasser in 5 Portionen zu a 1,74 mL (Gesamt 8,7 mL, 0,483 mol) in je 30 min (Gesamt 2,5 h) so zugegeben, dass die Innentemperatur 80 °C nicht übersteigt. Bei der Wasserdosierung wird die Stickstoffbeaufschlagung gestoppt.

**Anzahl der Portionen: 5 (a 1,74 g)**

| | |
|---|---|
| Portion 1: | 0 min nach Dosierbeginn (= Dosierstart) |
| Portion 2: | 30 min nach Dosierstart |
| Portion 3: | 60 min nach Dosierstart |
| Portion 4: | 90 min nach Dosierstart |
| Portion 5: | 120 min nach Dosierstart |

Nach der letzten Zugabe noch weitere 30 min nachrühren

| | |
|---|---|
| Gesamtzeit: | 2,5 Stunden |

Während der Dosierung sollte sich ein farbloser Niederschlag bilden, der von TDI-Harnstoff herrührt. Das entstehende CO₂ wird über eine Gasableitung aus dem Prozess entfernt. Nach der letzten Zugabe von Wasser wird die Temperatur schnell auf 125 °C erhöht und eine Stunde bei 125 °C gerührt. Dabei löst sich der farblose Niederschlag auf. Zum Abkühlen wird wieder ein leichter Stickstoffstrom eingeschaltet und bei Erreichen von Raumtemperatur werden 102,8 g Chlorparaffin zugegeben (30% bezüglich des Biurets).
Nach dem Homogenisieren erhält man ein Produkt mit einem NCO-Gehalt von 36,6%.

**Beispiel 1 - Ausführungsform 2 - Bezeichnung Biuret50**

| | | | |
|---|---|---|---|
| Rezeptur (Biuret 50): | Lupranat T 80 A | 5,74 Mol | 1,00 kg |
| | Wasser (destilliert) | 0,96 Mol | 17,41 g |
| | Diethylhexylphosphat | 1000 ppm | 1,00 g |
| | Chlorparaffin (30 Gew.-% bezüglich Biuret) | | 205,70 g |

### Herstellung von Biuret 50:

In einen 2000 mL beheizbaren Rührreaktor mit Turbinenrührer und Stickstoffanschluss, sowie Abgasleitung und Rückflusskühler werden 1,0 g (1000 ppm) Diethylphosphat in Stickstoff vorgelegt. Anschließend werden 1000 g (5,74 mol) Lupranat T 80 dosiert und unter leichtem Stickstoffstrom auf 65 °C temperiert. Danach wird Wasser in 5 Portionen zu a 3,48 mL (Gesamt 17,4 mL, 0,96 mol) in je 30 min (Gesamt 2,5 h) so zugegeben, dass die Innentemperatur 80 °C nicht übersteigt. Bei der Wasserdosierung wird die Stickstoffbeaufschlagung gestoppt.

**Anzahl der Portionen: 5 (a 1,74 g)**

| | |
|---|---|
| Portion 1: | 0 min nach Dosierbeginn (= Dosierstart) |
| Portion 2: | 30 min nach Dosierstart |
| Portion 3: | 60 min nach Dosierstart |
| Portion 4: | 90 min nach Dosierstart |
| Portion 5: | 120 min nach Dosierstart |

Nach der letzten Zugabe noch weitere 30 min nachrühren

| | |
|---|---|
| Gesamtzeit: | 2,5 Stunden |

Während der Dosierung sollte sich ein farbloser Niederschlag bilden, der von TDI-Harnstoff herrührt. Das entstehende CO₂ wird über eine Gasableitung aus dem Prozess entfernt. Nach der letzten Zugabe von Wasser wird die Temperatur schnell auf 125 °C erhöht und eine Stunde bei 125 °C gerührt. Dabei löst sich der farblose Niederschlag auf. Zum Abkühlen wird wieder ein leichter Stickstoffstrom eingeschaltet und bei Erreichen von Raumtemperatur werden 205,7 g Chlorparaffin zugegeben (30% bezüglich des Biurets).
Nach dem Homogenisieren erhält man ein Produkt mit einem NCO-Gehalt von 31,4 %.

### Beispiel 2 - Herstellung des monomerarmen Polyisocyanats

Der Kurzwegverdampfer wird mit folgenden Parametern in Betrieb genommen:

| | |
|---|---|
| Innentemperatur (Kühler): | 20 °C. |
| Außentemperatur (Wischerkorb): | 100 °C. |
| Rührerdrehzahl: | 600 Upm |
| Vakuum: | 0,02 - 0,03 mbar |
| Feed: | 0,3 kg/h |
| Fläche: | 754 cm² |

### Beispiel 2 - Ausführungsform 1 - Bezeichnung PTDI 25

Nach Erreichen der angegebenen Parameter wird mit dem Zutropfen des TDI/Biuret/Chlorparaffin-Gemisches Biuret 25 begonnen. Die Zutropfgeschwindigkeit beträgt 0.3 kg/h und wird konstant gehalten. Nach 2 Stunden wird das entmonomerisierte Wertprodukt aufgefangen und gesammelt. Die Edukt Zuführung und die Produktentnahme erfolgt während des Versuchs kontinuierlich, so dass die eingestellten Prozessbedingungen nicht verändert werden.

Das erhaltene Produkt wird anschließend untersucht und ergab folgende Analytik-Parameter:
- Restmonomergehalt TDI: 0,4%
- Viskosität: 67,71 Pa-s
- NCO-Gehalt: 21,5%

### Beispiel 2 - Ausführungsform 2 - Bezeichnung PTDI 50

Nach Erreichen der angegebenen Parameter wird mit dem Zutropfen des TDI/Biuret/Chlorparaffin-Gemisches Biuret 50 begonnen. Die Zutropfgeschwindigkeit beträgt 0.3 kg/h und wird konstant gehalten. Nach 2 Stunden wird das entmonomerisierte Wertprodukt aufgefangen und gesammelt. Die Edukt Zuführung und die Produktentnahme erfolgt während des Versuchs kontinuierlich, so dass die eingestellten Prozessbedingungen nicht verändert werden.

Das erhaltene Produkt wird anschließend untersucht und ergibt folgende Analytik-Parameter:
- Restmonomergehalt TDI: 0,5%
- Viskosität: 67,84 Pa-s
- NCO-Gehalt: 21,0%

### Beispiel 3 - Herstellung der Isocyanatkomponente

### Beispiel 3 - Ausführungsform 1 - Bezeichnung Iso-Komponente PTDI 25

### Herstellung der Iso-Komponente PTDI 25 :

780 g des PolymerTDI (nach Ausführungsbeispiel 2 - Ausführungsform 1) werden mit
130 g Trichlorpropylphosphat sowie
90 g Triethylphosphat
zu einer homogenen Isocyanatkomponente vermischt.

Das erhaltene Produkt wird anschließend untersucht und ergibt folgende Analytik-Parameter:
- Restmonomergehalt TDI: 0,31 %
- Viskosität: 5000 mPa.s
- NCO-Gehalt: 16,8%

### Beispiel 3 - Ausführungsform 2 - Bezeichnung Iso-Komponente PTDI 50

### Herstellung der Iso-Komponente PTDI 50 :

780 g des PolymerTDI (nach Ausführungsbeispiel 2 - Ausführungsform 1) werden mit
130 g Trichlorpropylphosphat sowie
90 g Triethylphosphat
zu einer homogenen Isocyanatkomponente vermischt.

Das erhaltene Produkt wird anschließend untersucht und ergibt folgende Analytik-Parameter:
- Restmonomergehalt TDI: 0,39%
- Viskosität: 5400 mPa·s
- NCO-Gehalt: 16,4%

### Beispiel 4 - Herstellung der Polyolkomponente

### Polyolkomponente 1:

Aus 263 g eines Polyetherpolyols auf Basis Glyzerin/Propylenoxyd / OH-Zahl = 155 mgKOH/g, 526 g eines Polyetherpolyols auf Basis Glyzerin/Propylenoxyd/Ethylenoxyd / OH-Zahl = 42 mgKOH/g, 60 g eines trifunktionellen bromierten Polyetherpolyols (Handelsname IXOL B 251) OH-Zahl = 330 mgKOH/g, 60 g Polyethylenglykol / OH-Zahl = 190 mgKOH/g, 35 g eines Silikonschaumstabilisators (Handelsname Tegostab B 2219), 30 g eines monofunktionellen methylierten Polyethylenglykol / OH-Zahl = 113 mgKOH/g, 25,7 g Dimorpholinodiethylether sowie 0,3 g Siliconöl (Handelsname Baysiloneöl M100) wird durch Vermischung in einem entsprechenden Behälter die Polyolkomponente hergestellt.

### Polyolkomponente 2:

Aus 333 g eines Polyetherpolyols auf Basis Glyzerin/Propylenoxyd / OH-Zahl = 155 mgKOH/g, 471,4 g eines Polyetherpolyols auf Basis Glyzerin/Propylenoxyd/Ethylenoxyd / OH-Zahl = 42 mgKOH/g, 80 g eines trifunktionellen bromierten Polyetherpolyols (Handelsname IXOL B 251) OH-Zahl = 330 mgKOH/g, 40 g Polyethylenglykol / OH-Zahl = 190 mgKOH/g, 30 g eines Silikonschaumstabilisators (Handelsname Tegostab B 2219), 20 g eines monofunktionellen methylierten Polyethylenglykol / OH-Zahl = 113 mgKOH/g, 25 g Dimorpholinodiethylether sowie 0,6 g Siliconöl (Handelsname Baysiloneöl M100) wird durch Vermischung in einem entsprechenden Behälter die Polyolkomponente hergestellt.

### Beispiel 5 - Fertigung des Aerosolschaumes

### Allgemeine Fertigung:

Die gemäß Füllvolumen berechnete Menge an Polyolkomponente wird im Aerosolbehälter vorgelegt.

### Die dazu berechnete Menge an Isocyanatkomponente wird zudosiert und der Aerosolbehälter mit einem Kippventil verschlossen. Durch das Ventil werden nacheinander die Treibgase in Form der jeweils gewählten Flüssiggase dosiert und der Inhalt des Aerosolbehälters durch schütteln homogenisiert. Es setzt die Prepolymerreaktion unter leichter Erwärmung ein, die nach ca. 5 Tagen (oder 24h bei ca. 50°C) abgeschlossen und der Aerosolschaum nachher verwendbar ist.

Aerosolschaumfertigung unter Verwendung der Beispielkomponenten (1L-Aerosoldose bei 75%Füllvolumen):

| Komponenten | Schaum 1 | Schaum 2 | Schaum 3 | Schaum 4 |
|---|---|---|---|---|
| Polyolkomponente | 127 g | 127 g | 143 g | 143 g |
| | Pol.-Komp.1 | Pol.-Komp.1 | Pol.-Komp.2 | Pol.-Komp.2 |
| Isocyanatkomponente | 538 g | 538 g | 499 g | 499 g |
| | Iso-Komp. | Iso-Komp. | Iso-Komp. | Iso-Komp. |
| | PTDI 25 | PTDI 50 | PTDI 25 | PTDI 50 |
| R134a (Tetrafluorethan) | 83 g R134a | 83 g R134a | 90 g R134a | 90 g R134a |
| DME (Dimethylether) | 45 g DME | 45 g DME | 49 g DME | 49 g DME |
| P/B 4,2 (Propan/Butan; 4,2 bar) | 28 g P/B | 28 g P/B | 31 g P/B | 31 g P/B |
| | (4,2bar) | (4,2bar) | (4,2bar) | (4,2bar) |

### Beispiel 6 - Test des Aerosolschaumes

Die gemäß Ausführungsbeispiel 5 gefertigten Aerosolschäume werden auf angefeuchtetes Papiervlies ausgeschäumt und härten zu jeweils elastischen bis weichelastischen Schäumen aus.

Beim Test dieser Schäume wurden folgende Parameter gemessen:

| | elastischer Schaum | | weichelastischer Schaum | |
|---|---|---|---|---|
| Eigenschaften | Schaum 1 | Schaum 2 | Schaum 3 | Schaum 4 |
| Monomergehalt (TDI im NCO-Prepolymer.) | 0,10 % | 0,11 % | 0,09% | 0,10% |
| Zugfestigkeit (fertiger Schaum) | 65 N/cm² | 40 N/cm² | 53 N/cm² | 91 N/cm² |
| Bruchdehnung (fertiger Schaum) | 55 % | 35% | 47 % | 64 % |

## Patentansprüche

1. Verfahren zur Herstellung eines monomerarmen Polyisocyanatprepolymers bei dem man
a) Polyisocyanat mit
b) Wasser in Gegenwart von
c) Lösungsmittel und
d) gegebenenfalls Biuretisierungskatalysator
zu biuretverknüpftem Polyisocyanat umsetzt, nicht umgesetztes monomeres Polyisocyanat abtrennt und die so erhaltene biuretverknüpfte Polyisocyanatkomponente im Überschuss mit Verbindungen mit mindestens zwei gegenüber Isocyanaten reaktiven Gruppen in Gegenwart von Katalysator zum Polyisocyanatprepolymer umsetzt.

2. Verfahren nach Anspruch 1, **dadurch gekennzeichnet, dass** als Polyisocyanat TDI eingesetzt wird.

3. Verfahren nach Anspruch 1 oder 2, **dadurch gekennzeichnet, dass** als Lösungsmittel ein halogenierter Kohlenwasserstoff eingesetzt wird.

4. Verfahren nach einem der Ansprüche 1 bis 3 **dadurch gekennzeichnet, dass** als Katalysator ein Mono-, Di- und/oder Trialkylester und/oder -arylester der Phosphorsäure eingesetzt wird.

5. Verfahren nach einem der Ansprüche 1 bis 4 **dadurch gekennzeichnet, dass** nach dem Abtrennen monomerer Isocyanate und vor dem Umsetzen mit Verbindungen mit mindestens zwei gegenüber Isocyanaten reaktiven Gruppen eine Substanz zur Viskositätserniedrigung zu dem biuret-verknüpften Polyisocyanat zugegeben wird.

6. Verfahren nach Anspruch 5, **dadurch gekennzeichnet, dass** die Substanz zur Viskositätserniedrigung ein organisches Phosphat ist.

7. Polyisocyanatprepolymer, erhältlich nach einem Verfahren gemäß einem der Ansprüche 1 bis 7.

8. Polyisocyanatprepolymer nach Anspruch 7, **dadurch gekennzeichnet, dass** der Gehalt an monomerem Isocyanat kleiner 0,25 Gew.-%, bezogen auf das Gewicht des Polyisocyanatprepolymers, ist.

9. Polyisocyanatmischung, enthaltend ein monomerarmes Polyisocyanatprepolymer gemäß einem der Ansprüche 7 oder 8, Treibmittel, gegebenenfalls Hilfs- und Zusatzstoffe, gegebenenfalls schaumregulierende Zusatzstoffe sowie gegebenenfalls weitere, nicht flüchtige Polyisocyanate.

10. Einkomponenten-Dosenschaum, enthaltend eine Polyisocyanatmischung nach Anspruch 9.

## Geänderte Patentansprüche

### Geänderte Patentansprüche gemäss Regel 137(2) EPÜ.

**1.** Verfahren zur Herstellung eines Polyisocyanatprepolymers mit einem Gehalt an monomerem Polyisocyanat von kleiner 0,5 Gew.-%, bezogen auf das Gesamtgewicht des Polyisocyanatprepolymers, bei dem man
a) aromatische Polyisocyanat mit
b) Wasser in Gegenwart von
c) Lösungsmittel und
d) gegebenenfalls Biuretisierungskatalysator
zu biuretverknüpftem Polyisocyanat umsetzt, nicht umgesetztes monomeres Polyisocyanat abtrennt und die so erhaltene biuretverknüpfte Polyisocyanatkomponente im Überschuss mit Verbindungen mit mindestens zwei gegenüber Isocyanaten reaktiven Gruppen in Gegenwart von Katalysator zum Polyisocyanatprepolymer umsetzt.

**2.** Verfahren nach Anspruch 1, **dadurch gekennzeichnet, dass** als Polyisocyanat TDI eingesetzt wird.

**3.** Verfahren nach Anspruch 1 oder 2, **dadurch gekennzeichnet, dass** als Lösungsmittel ein halogenierter Kohlenwasserstoff eingesetzt wird.

**4.** Verfahren nach einem der Ansprüche 1 bis 3 **dadurch gekennzeichnet, dass** als Biuretisierungskatalysator ein Mono-, Di- und/oder Trialkylester und/oder - arylester der Phosphorsäure eingesetzt wird.

**5.** Verfahren nach einem der Ansprüche 1 bis 4 **dadurch gekennzeichnet, dass** nach dem Abtrennen monomerer Isocyanate und vor dem Umsetzen mit Verbindungen mit mindestens zwei gegenüber Isocyanaten reaktiven Gruppen eine Substanz zur Viskositätserniedrigung zu dem biuret-verknüpften Polyisocyanat zugegeben wird.

**6.** Verfahren nach Anspruch 5, **dadurch gekennzeichnet**, das die Substanz zur Viskositätserniedrigung ein organisches Phosphat ist.

**7.** Polyisocyanatprepolymer, erhältlich nach einem Verfahren gemäß einem der Ansprüche 1 bis 7.

**8.** Polyisocyanatprepolymer nach Anspruch 7, **dadurch gekennzeichnet, dass** der Gehalt an monomerem Isocyanat kleiner 0,25 Gew.-%, bezogen auf das Gewicht des Polyisocyanatprepolymers, ist.

**9.** Polyisocyanatmischung, enthaltend ein Polyisocyanatprepolymer mit einem Gehalt an monomerem Polyisocyanat von kleiner 0,5 Gew.-%, bezogen auf das Gesamtgewicht des Polyisocyanatprepolymers, gemäß einem der Ansprüche 7 oder 8, Treibmittel, gegebenenfalls Hilfs- und Zusatzstoffe, gegebenenfalls schaumregulierende Zusatzstoffe sowie gegebenenfalls weitere, nicht flüchtige Polyisocyanate.

**10.** Einkomponenten-Dosenschaum, enthaltend eine Polyisocyanatmischung nach Anspruch 9.
